# EUROPEAN PATENT APPLICATION

(11) **EP 4 700 616 A1**
(43) Date of publication of application: **25.02.2026**
(21) Application number: 24195490.8
(22) Date of filing: 20.08.2024
(51) Int. Cl.: G06F 21/16, G06F 21/64

(54) **EVALUATION OF PROVENANCE OF ELECTRONIC MEDIA FILES**

(71) Applicant: Nagravision Sàrl, 1033 Cheseaux-sur-Lausanne (CH)
(72) Inventor: SARDA, Pierre, 1033 Cheseaux-sur-Lausanne (CH)
(74) Representative: Parker, Andrew James

(57) **Abstract**

The invention provides a computer-implemented method of evaluating the provenance of an electronic media file, the computer-implemented method comprising: receiving the electronic media file from a source; determining whether the electronic media file meets a first trust criterion; in response to a determination that the electronic media file does not meet the first trust criterion, determining whether the electronic media file meets a second trust criterion; and in response to a determination that the electronic media file meets the second trust criterion, generating first metadata associated with the electronic media file, the first metadata to indicate that the electronic media file does not meet the first trust criterion.

## Description

### TECHNICAL FIELD OF THE INVENTION

The present invention relates to a computer-implemented method of evaluating the provenance of an electronic media file, as well as corresponding computer programs, computer program products, computer-readable storage media, data carriers and apparatuses.

### BACKGROUND TO THE INVENTION

Various trust establishment protocols such as the protocol proposed by the Coalition for Content Provenance and Authenticity, or C2PA¹ are known, and enable users to track various evolutions of content in the form of electronic media files. Existing trust establishment protocols, including the C2PA protocol tend only to specify actions to be taken when an electronic media file is fully compliant with the requirements imposed by the protocol.
**¹** https://c2pa.org/specifications/specifications/1.0/specs/C2PA_Specification.html

However, in some cases, it is useful for users to know if an electronic media file is non-compliant, partially compliant, or was once compliant with a trust establishment protocol. It is an object of the present invention to provide a tool which enables the generation of useful metadata relating to the provenance of an electronic media file for upload with the electronic media file on e.g. a social media platform, even if the electronic media file does not meet the requirements of e.g. a first trust establishment protocol.

### SUMMARY OF THE INVENTION

The present invention, broadly, provides a computer-implemented method or associated tool which determines whether various predetermined trust criteria are met, and generates indicative metadata accordingly. Electronic media files may be uploaded to a platform in association with the metadata or a reference or link via which the metadata may be accessed, so that users of the platform are able to determine whether the content they are viewing has been tampered with otherwise altered.

A first aspect of the invention provides a computer-implemented method of evaluating the provenance of an electronic media file, the computer-implemented method comprising: receiving the electronic media file from a source; determining whether the electronic media file meets a first trust criterion; in response to a determination that the electronic media file does not meet the first trust criterion, determining whether the electronic media file meets a second trust criterion; and in response to a determination that the electronic media file meets the second trust criterion, generating first metadata associated with the electronic media file, the first metadata to indicate that the electronic media file does not meet the first trust criterion.

Herein, the term "provenance" is used to refer to a record of ownership and editing of the electronic media file, which is used as a guide to authenticity and quality. The electronic media file may be an image file, an audio file, a video file, or any other kind of electronic media file which may be envisaged by the skilled person.

Meeting the first trust criterion may be indicative of the valid execution of a predetermined trust establishment protocol when the electronic media file was initially created. The predetermined trust establishment protocol may comprise a file creation sub-protocol which is executed when the electronic media file is first generated. The predetermined trust establishment protocol may further comprise a file transfer sub-protocol which is executed each time the electronic media file is transferred or transmitted from a source to a destination. The predetermined trust establishment protocol may further comprise a modification sub-protocol which is executed each time the electronic media file is modified by a user. Each sub-protocol listed above may comprise the generation of metadata which is stored in a record in a secure data repository.

Accordingly, the record may comprise metadata relating to the provenance of the electronic media file. Specifically, the metadata may comprise metadata relating to the generation of the electronic media file, such as one or more of:
data identifying the creator of the electronic media file (e.g. the person who created the electronic media file or a device on which the electronic media file was generated);
security information (e.g. signatures and/or certificates of the user and/or device which created the electronic media file, or a tool which was used to create the electronic media file);
data identifying the location at which the electronic media file was generated (e.g. an IP or other computer address, and/or the geographic location);
time and date information (e.g. the time and/or date at/on which the electronic media file was generated).

The metadata may further, or alternatively, comprise metadata relating to any transfers of the electronic media file, such as, for each transfer, one or more of:
data identifying the device sending (e.g. uploading, transferring, transmitting or otherwise sharing) the electronic media file;
data identifying the user sending (e.g. uploading, transferring, transmitting or otherwise sharing) the electronic media file;
security information (e.g. signatures and/or certificates of the user and/or device which sent the electronic media file, or a tool which was used to send the electronic media file);
data identifying the device receiving (e.g. downloading or otherwise receiving) the electronic media file;
data identifying the user receiving (e.g. downloading or otherwise receiving) the electronic media file;
security information (e.g. signatures and/or certificates of the user and/or device which received the electronic media file, or a tool which was used to receive the electronic media file);
data identifying an upload platform to which the electronic media file was uploaded;
time and date information (e.g. the time and/or date at/on which the transfer took place).

The metadata may further, or alternatively, comprise metadata relating to any modifications which have been made to the electronic media file, such as one or more of:
information about the nature of the modification to the electronic media file including cropping, resizing, transcoding;
data identifying the device at which the modification took place;
data identifying a user of the device at which the modification took place;
data identifying a location (e.g. an IP or other computer address, and/or the geographic location) at which the modification took place;
data identifying a tool used to modify the electronic media file;
time and date information (e.g. the time and/or date at/on which the modification took place);
security information (e.g. signatures and/or certificates of the user, device and/or tool used to modify the electronic media file)

The secure data repository referred to throughout this disclosure may be a blockchain. Herein, the term "blockchain" refers to a distributed ledger which contains a plurality of records which are securely linked together via cryptographic hash functions. The operation of a blockchain is such that a record on the blockchain cannot be altered without the alteration being detectable, due to the distributed nature of the ledger. Blockchains are therefore suitable for storing provenance data which needs to be resistant to tampering.

The purpose of the present invention is to detect and inform users of unauthorized modifications or alterations to the electronic media file. Herein, "unauthorized" modifications or alterations to the electronic media file are those alterations which are not accounted for in the metadata relating to the provenance of the electronic media file. Throughout this disclosure, we use the term "tampering" to refer to these unauthorized modifications or alterations, in order to differentiate them from the authorized modifications or alterations which are accounted for in detail in the metadata relating to the provenance of the electronic media file.

Successful execution of the trust establishment protocol (including the associated sub-protocols) effectively gives rise to a record which includes detailed information about the history of an electronic media file including its generation, transfers, and modifications, thereby guaranteeing the provenance of the electronic media file. Thus, execution of the trust establishment protocol ensures provenance of the electronic media file.

Either by virtue of execution of the steps of a predetermined trust establishment protocol, or otherwise, the first trust criterion may indicate that the electronic media file is associated with an existing record stored in a secure data repository, the existing record comprising metadata relating to the provenance of the electronic media file as outlined in detail above. The first trust criterion (more specifically, meeting the first trust criterion) may also indicate that the electronic media file has not been tampered with, i.e. modified or altered in an unauthorized manner such that information relating to the modification is not present in the existing record in the secure data repository. Thus, the first trust criterion may indicate that the electronic media file has not been tampered with since the generation of the existing record on the secure data repository, and/or may indicate that the electronic media file has not been tampered with since its generation (e.g. by a camera or other recording equipment which is configured to execute elements of the predetermined trust establishment protocol when the media which forms the subject of the electronic media file is originally captured, e.g. the file creation sub-protocol).

We now discuss in more detail the determination whether the electronic media file meets the first trust criterion. This process depends on the specific trust establishment protocol which is employed. The trust establishment protocol may, at each event (i.e. file creation, transfer, and modification) give rise to metadata being stored at a respective location in the secure data repository. In order to associate the electronic media file to the location in the secure data repository, a hash of the electronic data representing the electronic media file may be used or usable to generate a reference to the location of the metadata in the secure data repository. This means that if the electronic media file is tampered with, i.e. if it is altered in an unauthorized manner, it will no longer be possible to retrieve the location of the metadata in the secure data repository, because a hash generated using the data representing the tampered-with electronic media file will be different, and no longer be usable to generate a reference to the location of the metadata in the secure data repository. Essentially, the tampering leads to the chain of provenance being broken, in a manner which is detectable. An example of a trust establishment protocol which operates in this manner is the protocol proposed by the Coalition for Content Provenance and Authenticity, or C2PA².
**²** https://c2pa.or2/specifications/specifications/1.0/specs/C2PA_Specification.html

In some implementations, determining whether the electronic media file meets the first trust criterion may therefore comprise applying a hashing algorithm to electronic data representing the electronic media file to generate a hash. A suitable hashing algorithm is SHA-256. Determining whether the electronic media file meets the first trust criterion may then further comprise generating a reference (e.g. a link, a storage address, or other reference to a storage location) based on the generated hash; and determining whether the generated reference is a valid reference to an existing record stored in a secure data repository, the existing record comprising metadata relating to the provenance of the electronic media file. The reference may be generated according to a scheme defined by the trust establishment protocol. For example, the hash or other reference may be an entry point in the secure data repository, whereby each hash is linked to a record in the secure data repository. If the generated reference is a valid reference, it may be determined that the electronic media file meets the first trust criterion. If the generated reference is not a valid reference, it may be determined that the electronic media fila does not meet the first trust criterion.

In response to a determination that the electronic media file meets the first trust criterion, the computer-implemented method may further comprise generating metadata relating to the provenance of the electronic media file, or generating metadata to indicate that the electronic media file meets the first trust criterion. The generated metadata may comprise the same components as outlined earlier in this disclosure with reference to the various stages of the trust establishment protocol. The computer-implemented method of the first aspect of the invention is particularly applicable e.g. when electronic media files are being uploaded to viewing platforms such as video sharing platforms, social media platforms, and news platforms. Thus, the generated new metadata may comprise in particular information relation to the upload of the electronic media file to the platform in question. It is desirable for users of the platforms, or users otherwise accessing the data, to be able clearly to see whether the data has been tampered with (or preferably, not tampered with). Thus, the generated metadata may comprise an implicit indication or an explicit indication that the electronic media file has not been tampered with, or information to that effect, e.g. that the electronic media file is trustworthy, or complies with the trust establishment protocol.

The generated metadata may be stored in the existing record in the secure data repository. Alternatively, the generated metadata may be stored in a new record in the secure data repository, the new record comprising a link or other suitable reference to the existing record. Generating metadata may comprise modifying or enhancing existing metadata, such as metadata present in the existing record stored in the secure data repository. The generated metadata may comprise a copy of the existing metadata and new metadata, the new metadata including a link or other suitable reference to the existing record. In these cases, generating metadata may comprise generating a new record comprising the metadata as outlined above, and storing the generated new record in the secure data repository. The generated new record stored in the secure data repository may be accessible via a link or other suitable reference, and the link or other suitable reference may be generated by applying a hashing algorithm to electronic data representing the electronic media file, to generate a hash. A link or other suitable reference may be derived or derivable from the generated hash.

The computer-implemented method of the first aspect of the invention includes a step of determining whether the electronic media file meets a second trust criterion. We now discuss this in more detail. The second trust criterion may also be related to the trust establishment protocol on which the first trust criterion is based. The second trust criterion may be less stringent than the first trust criterion. For example, where the first trust criterion may require that the electronic media file is associated with an existing record stored in a secure data repository and that the electronic media file has not been tampered with, the second trust criterion may require (only) that the electronic media file is associated with an existing record stored in the secure data repository. The second trust criterion may still be met if the electronic media file has been tampered with, because it relies only on the presence of an existing record in the secure data repository without stipulating anything about whether the electronic media file has been tampered with. Essentially, meeting the second trust criterion indicates that, even if the chain was broken due to some unauthorized modification or transfer of the electronic media file, for which no metadata was generated and stored on the secure data repository, that the chain did exist at some point and can potentially be retrieved.

In order to enable the retrieval of the chain, or more strictly speaking, identification of an existing record on the secure data repository, such as a most recent record on the secure data repository pertaining to an authorized event taking place in respect of the electronic media file (e.g. creation of the electronic media file, authorized transfer of the electronic media file, or authorized modification of the electronic media file), the respective sub-protocol of the trust establishment protocol may further comprise, for example after the generation of the metadata relating to the authorized event, generating and embedding data into the electronic media file, the embedded data identifying a record in the secure data repository which includes the metadata relating to the authorized event. From this, it will be appreciated that even if the chain is broken, e.g. due to tampering with the electronic media file, if this embedded data remains, and can be extracted, an existing record stored on the secure data repository can still be identified. The embedded data may, for example, comprise an identifier of the existing record. The embedded data may be in the form of a watermark, which may have a payload of e.g. 16, 32, or 64 bits. While it is possible for the watermark to include the link or reference to the existing record on the secure data repository in question, the capacity of the watermark may be too small properly to encode the link or reference. Hence, it may be preferable for the watermark to encode an identifier of the existing record which is stored in some pre-existing database, in association with a reference to the existing record in the secure data repository.

Alternatively, the respective sub-protocol of the trust establishment protocol may further comprise, for example after the generation of the metadata relating to the authorized event, generating and embedding data into the electronic media file, the embedded data indicating that a record in the secure data repository exists. Such embedded data may not identify the record. This is advantageous because it enables a user or device which is assessing the provenance of the electronic media file to know that, at some point, the electronic media file was compliant with predetermined trust establishment protocol, but without the need to embed large amounts of data within the data representing the electronic media file. Such a watermark may be a zero-bit watermark, and may be applied using a zero-bit watermarking technique, such as described by Furon (2006)³.
**³ "**A constructive and unifying framework for zero-bit watermarking" Teddy Furon (2006) [https://doi.org/10.48550/arXiv.cs/0606034**]**

Determining whether the electronic media file meets the second trust criterion may comprise determining whether electronic data representing the electronic media file comprises embedded data identifying a record stored in the secure data repository, the record comprising metadata relating to the provenance of the electronic media file. This may comprise determining whether electronic data representing the electronic media file comprises a watermark. As outlined above, the watermark may identify a record stored in the secure data repository, the record comprising metadata relating to the provenance of the electronic media file. Alternatively, the watermark may simply indicate that such a record is present in the secure data repository, without identifying it. Thus, if the presence of a watermark or other embedded data indicates that a record is present in the secure data repository, but it was not obtained e.g. during the step of determining whether the first trust criterion is met, this indicates that the electronic media file may have been undergone unauthorized tampering.

Determining whether electronic data representing the electronic media file comprises a watermark may be a two-stage process in that the computer-implemented method may first comprise determining whether the electronic data representing the electronic media file comprises embedded data (e.g. in the form of a watermark), and second determining whether the embedded data identifies an existing record in the secure data repository.

Determining whether the electronic data comprises a watermark may comprise applying a watermark detection algorithm to the electronic data representing the electronic media file. If it is determined that electronic data representing the electronic media file comprises embedded data such as a watermark (which may identify a record stored in the secure data repository), it may be determined that the electronic data file meets the second trust criterion. If it is determined that electronic data representing the electronic media file does not comprise embedded data such as a watermark (which may identify a record stored in the secure data repository), it may be determined that the electronic data file does not meet the second trust criterion.

Determining whether the embedded data (e.g. in the form of a watermark) identifies an existing record in the secure data repository may comprise executing a lookup in a pre-existing database, the pre-existing database storing associations between identification data or identifiers, and references to respective existing records in the secure data repository. The embedded data may comprise the identification data or an identifier for the electronic media file.

In some cases, the trust establishment protocol may not comprise embedding data in the electronic media file. In those cases, detecting whether the electronic media file meets the second trust criterion may comprise extracting information from the electronic data representing the electronic media file, e.g. by applying a fingerprinting algorithm to generate a fingerprint of the electronic data representing the electronic media file. The extracted data, e.g. the fingerprint may then be used to identify the electronic media file. An output of the identification may be an identifier of the electronic media file in a pre-existing database. Determining whether the second trust criterion is met may then comprise determining whether there is an existing record in the secure data repository based on the identity of the determined identity (e.g. the identifier) of the electronic media file.

In other cases, a hybrid approach may be taken, where determining whether the second trust criterion is met is based partially on embedded data. Determining whether the second trust criterion is met may also be (partially) based on fingerprinting or reference to other metadata about the electronic media file. The method may comprise, in addition to receiving the electronic media file from the source, receiving metadata about the electronic media file. For example, the computer-implemented method may comprise receiving a message comprising the electronic media file and metadata about the electronic media file. The metadata may also form part of the electronic media file. It should be stressed here that the metadata being referred to is distinct from the metadata which is stored on the secure data repository, but it may contain a link or other appropriate reference to the metadata which is stored on the secure data repository. The metadata which is received from the source (either separately from, along with, or as part of the electronic media file) will be referred to herein as "received metadata" in order to differentiate it from the metadata stored in a record on the secure data repository.

The received metadata may comprise one or more of the following (it will be noted that this is similar to the metadata stored in the secure data repository):
data identifying the creator of the electronic media file (e.g. the person, role of the person, organization, type of organization, or entity who/which created the electronic media file or a device on which the electronic media file was generated);
data identifying the location at which the electronic media file was generated (e.g. an IP or other computer address, and/or the geographic location);
time and date information (e.g. the time and/or date at/on which the electronic media file was generated).
data identifying the source device (or user thereof) from which the electronic media file is received (e.g. the device uploading, transferring, transmitting or otherwise sharing the electronic media file);
data identifying an upload platform to which the electronic media file is to be uploaded.

Particularly, but not exclusively, in the cases where determining whether the electronic media file meets the second trust criterion comprises detecting a watermark in the electronic data representing the electronic media file, a two-stage process may be used. This is particularly applicable to implementations where the presence of a watermark is determined because watermarks typically only encode a small amount of information, e.g. 16, 32, or 64 bits, which may be insufficient to represent a unique identifier for an existing record for all of the many billions of electronic media files which are created, transferred or modified every day. Equivalently, a single database comprising associations between identifiers and existing data records for all of the many billions of electronic media files which are generated, transferred, or modified every day may be unrealistic.

Identifiers of the existing records in the secure data repository may be stored in a plurality of databases, each database corresponding to a subset of the origin data or the destination data. For example, each database may be associated with content arising from a respective news organization. As discussed, determining whether the electronic media file meets the second trust criterion may comprise determining whether electronic data representing the electronic media file comprises embedded data identifying a record stored in the secure data repository, and that this may involve determining whether an identifier of the record is present in some pre-existing database, which stores associations between the identifiers and references to respective existing records in the secure data repository. In some cases, the computer-implemented method may comprise selecting, based on the received metadata (e.g. the origin data or destination data), a database of a plurality of databases. Then, if it is determined that the electronic data representing the electronic media file comprises embedded data (e.g. in the form of a watermark), determining whether the electronic media file meets the second trust criterion may then comprise executing a lookup for the embedded data in the selected database to determine whether it is associated with a reference to a record in the secure data repository.

Rather than identifying the database of the plurality of databases using the received metadata, determining whether the electronic media file meets the second trust criterion may comprise extracting a fingerprint from the electronic media file, or from the electronic data representing the electronic media file. The computer-implemented method may accordingly comprise selecting a database from the plurality of databases based on the extracted fingerprint.

In some cases, it may be desirable only to execute the computer-implemented method of the first aspect of the disclosure in respect of content for which traceability is particularly important, e.g. content from news organizations, or content to be posted on news platforms.

Thus, the computer-implemented method may further comprise determining origin information or destination information of the electronic media file received from the source based on the received metadata. Herein, "origin information" refers non-exhaustively to information such as data identifying the creator of the electronic media file, data identifying the location at which the electronic media file was generated, and data identifying the source device (or user thereof) from which the electronic media file was received, as outlined in the bulleted list above. Herein, "destination information" may refer non-exhaustively to data identifying an upload platform to which the electronic media file is to be uploaded. The computer-implemented method may further comprise determining whether the origin information meets an origin information criterion or determining whether the destination information meets a destination criterion. The step of determining whether the electronic media file meets the second trust criterion may only be executed if it is determined that the origin information criterion or the destination information criterion is met.

The origin information criterion may specify that the origin information is on a predetermined list. For example, the origin information criterion may specify that the origin information specifies that the electronic media file was received from one of a predetermined plurality of users, organizations, or entities. Or, the origin information may specify that the electronic media file was received from e.g. a news organization. Analogously, the destination information criterion may specify that the destination information is on a predetermined list. For example, the destination information criterion may specify that the destination information specifies that the electronic media file is for upload to a news platform generally, or to a specific plurality of news platforms, or other upload platforms. By only determining whether the second trust criterion is met for a subset of request meeting an origin information criterion or a destination information criterion, the computational demand is reduced. Consider also the case where the trust establishment protocol requires that a watermark or other data is embedded in the electronic media file. Watermarks are typically only able to encode 16, 32, or 64 bits of data, which may be insufficient to encode a unique identifier for the many billions of electronic media files which are created, transferred, or modified every day. By only performing watermark detection for electronic media files which arise from certain origins, or which are destined for certain destinations, it is not necessary to generate a unique identifier for every one of the many billions of electronic media files.

Meeting the second trust criterion indicates that the trust establishment protocol was executed in respect of the electronic media file at some point in its history, and therefore that the media content represented by the electronic media file was at some point trustworthy, i.e. was generated, transferred, or modified in an authorized manner. However, the fact that it does not meet the first trust criterion suggests that there may have been some tampering, or an unauthorized transfer of the electronic media file. Accordingly, in response to a determination that the electronic media file does not meet the second trust criterion, metadata is generated which indicates that the electronic media file does not meet the first trust criterion.

As before, if it can be identified, the generated metadata may be stored in the existing record in the secure data repository. The generated metadata may comprise second metadata indicating that the electronic media file meets the second trust criterion.

Alternatively, the generated metadata may be stored in a new record in the secure data repository, the new record comprising a link or other suitable reference to the existing record, if it can be identified. Generating metadata may comprise modifying or enhancing existing metadata, such as metadata present in the existing record stored in the secure data repository. The generated metadata may comprise a copy of the existing metadata and new metadata, the new metadata specifying, for example, that some tampering of the electronic media file may have taken place since the generation of the existing record. In those cases where, for example, a watermark is identified which only indicates the presence of an existing record, but which does not identify it, the generated metadata may comprise data indicating that the record exists but without a link or other suitable reference to the existing record. As in the cases where it is determined that the first trust criterion is met, in these cases, generating metadata may comprise generating a new record comprising the metadata as outlined above, and storing the generated new record in the secure data repository. The generated new record stored in the secure data repository may be accessible via a link or other suitable reference, and the link or other suitable reference may be generated by applying a hashing algorithm to electronic data representing the electronic media file, to generate a hash. A link or other suitable reference may be derived or derivable from the generated hash.

We discuss above the case where the second trust criterion is met. However, it is possible that the second trust criterion may not be met, e.g. if there has never been an existing record relating to the electronic media file in the secure data repository, or if it is not possible to retrieve the existing record. In response to a determination that the electronic media file does not meet the second trust criterion, the computer-implemented method may further comprise generating third metadata to indicate that the electronic media file does not meet the second trust criterion. The third metadata may be stored in a new record in the secure data repository. As in the cases where it is determined that the first trust criterion is met or the second trust criterion is met, in these cases, generating the metadata may comprise generating a new record comprising the third metadata as outlined above, and storing the generated new record in the secure data repository. The generated new record stored in the secure data repository may be accessible via a link or other suitable reference, and the link or other suitable reference may be generated by applying a hashing algorithm to electronic data representing the electronic media file, to generate a hash. A link or other suitable reference may be derived or derivable from the generated hash.

According to implementations of the present invention, other trust criteria may also be utilized in order to augment information which may be provided to a user or other party accessing an electronic media file. These may be used in addition to, or independently of, the first and/or second trust criteria which have already been discussed.

For example, the computer-implemented method of the first aspect of the disclosure may further comprise determining whether the electronic media file meets a third trust criterion. In response to a determination that the electronic media file does not meet the third trust criterion, the computer-implemented method may further comprise generating metadata associated with the electronic media file to indicate that the electronic media file does not meet the third trust criterion. In response to a determination that the electronic media file meets the third trust criterion, the computer-implemented method may further comprise generating metadata associated with the electronic media file to indicate that the electronic media file meets the third trust criterion.

Determining whether the third trust criterion is met may comprise applying a forensic algorithm to the data representing the electronic media file. Herein, the term "forensic algorithm" is used to referred to an algorithm which analyses the content of the data representing the electronic media file in order to detect any malicious behaviour such as tampering, forgery, deepfakes, infringement of IP rights, or the like. Applying the forensic algorithm may comprise applying a trained machine-learning model to the electronic data representing the electronic media file, the trained machine-learning model configured to generate an output indicative of whether the electronic media file meets the third trust criterion, e.g. to detect whether the electronic media file has been tampered with (e.g. content alteration), to detect whether the electronic media file is a forgery, to detect whether the electronic media file is a deepfake, and so on. Any suitable machine-learning algorithm may be used for this purpose, including neural networks such as convolutional neural networks.

In some cases, applying the forensic algorithm may comprise applying a watermark detection algorithm. This is because, in some cases, authentic content may be watermarked in every frame, but where content alteration has taken place, the watermark may be missing from one or more frames. This may be combined with the watermark detection which may be used to determine whether the electronic media file meets the second trust criterion.

As discussed, the computer-implemented method of the first aspect of the invention may be applied to an electronic media file which is submitted for upload to an upload platform such as a social media platform, file sharing platform, video streaming platform, music streaming platform, a news platform, or the like. Thus, the computer-implemented method may further comprise uploading the electronic media file to a platform where it is accessible to users via a network connection. The computer-implemented method may further comprise uploading a link or otherwise providing access to the generated metadata. This enables users to whom the electronic media file is accessible on the platform to access the generated metadata. The link may be a link to a generated new record, or the existing record. Crucially, by enabling access to the generated metadata, the user of the platform is able to access information about the provenance of the electronic media file, to enable them to form a view on the extent to which the content in the electronic media file can be trusted.

Before the electronic media file is uploaded to the upload platform, the computer-implemented method may further comprise transcoding the electronic media file to a format appropriate for upload to the respective upload platform. In those cases where a link or reference to the generated metadata is generated based on a hash of the electronic data representing the electronic media file, generation of the hash preferably takes place after the electronic media file has been transcoded. This avoids the risk that transcoding the electronic media file will alter the data representing the electronic media file to the extent that the generated hash is different, which could lead to users being unable to access the metadata.

The first aspect of the invention is directed towards a computer-implemented method. A second aspect of the invention provides a computer program or computer program product comprising instructions which, when the program is executed by a computer, cause the computer to execute the computer-implemented method of the first aspect of the present invention. The computer program or computer program product may take the form of a downloadable file, which when installed on a computer, enables the computer to execute the instructions and thereby to execute the computer-implemented method of the first aspect of the invention. The computer program or computer program product may be embodied as a tool for processing an electronic media file before upload onto an upload platform. A third aspect of the invention provides a computer-readable storage medium or data carrier comprising instructions which, when executed by a computer, cause the computer to execute the computer-implemented method of the first aspect of the invention. A fourth aspect of the invention provides an apparatus comprising a processor which is configured to execute the computer-implemented method of the first aspect of the invention. Naturally, the optional features set out above in respect of the first aspect of the invention also apply equally well to the second, third, and fourth aspects of the invention.

A further, fifth aspect of the invention provides a computer-implemented method of evaluating the provenance of an electronic media file, the computer-implemented method comprising: receiving the electronic media file from a source; determining whether the electronic media file meets a trust criterion; in response to a determination that the electronic media file meets the trust criterion, generating metadata associated with the electronic media file to indicate that the electronic media file meets the first trust criterion; and in response to a determination that the electronic media file does not meet the trust criterion, generating metadata associated with the electronic media file to indicate that the electronic media file does not meet the trust criterion. Corresponding computer programs, computer program products, computer-readable storage media, data carriers and apparatuses are also provided. Optional features set out above in respect of the first aspect of the invention also apply equally well to the fifth aspect of the invention.

The invention includes the combination of the aspects and preferred features described except where such a combination is clearly impermissible or expressly avoided.

### BRIEF DESCRIPTION OF THE DRAWINGS

Embodiments of the present invention will now be described with reference to the accompanying drawings, in which:
- Fig. 1 is a high-level flowchart illustrating the journey of an electronic media file.
- Fig. 2 is an example of a system which may be used to execute computer-implemented methods according to the present invention.
- Fig. 3 is a flowchart illustrating a computer-implemented method according to the present invention.
- Fig. 4 is a flowchart illustrating a determination of whether the first trust criterion is met.
- Fig. 5 is a flowchart illustrating how a watermark may be used to determine whether the electronic media file meets the second trust criterion.
- Fig. 6 is a flowchart illustrating a determination of whether the third trust criterion is met.

### DETAILED DESCRIPTION OF THE DRAWINGS

Aspects and embodiments of the present invention will now be discussed with reference to the accompanying figures. Further aspects and embodiments will be apparent to those skilled in the art. All documents mentioned in this text are incorporated herein by reference.

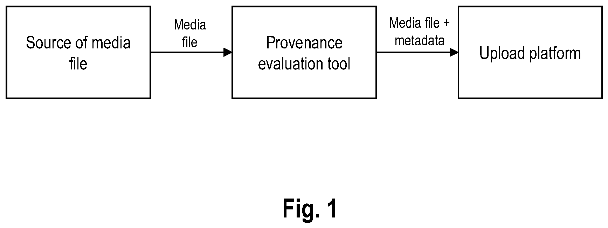

Broadly, the present invention provides a way of determining the provenance of a given media file to be uploaded, e.g. to a social media platform, a news website, or any other platform where the media file is accessible to users (e.g. Internet users), referred to generally herein as an "upload platform". It will be appreciated that the present invention is applicable to a range of upload platforms, and is not restricted to social media platforms or news websites. Fig. 1 illustrates this schematically at a very high level. As a media file is uploaded from a source to the upload platform, the present invention effectively provides a provenance evaluation tool which is able to analyse various features of the media file, and to generate metadata relating to the provenance of the media file. The media file and the metadata are then passed to the upload platform for upload. In some cases, the metadata may not be uploaded to the upload platform, but rather a link via which the metadata is accessible is uploaded to the upload platform instead, to enable users accessing the media file on the upload platform to access the metadata in order to ascertain information about the provenance of the media file.

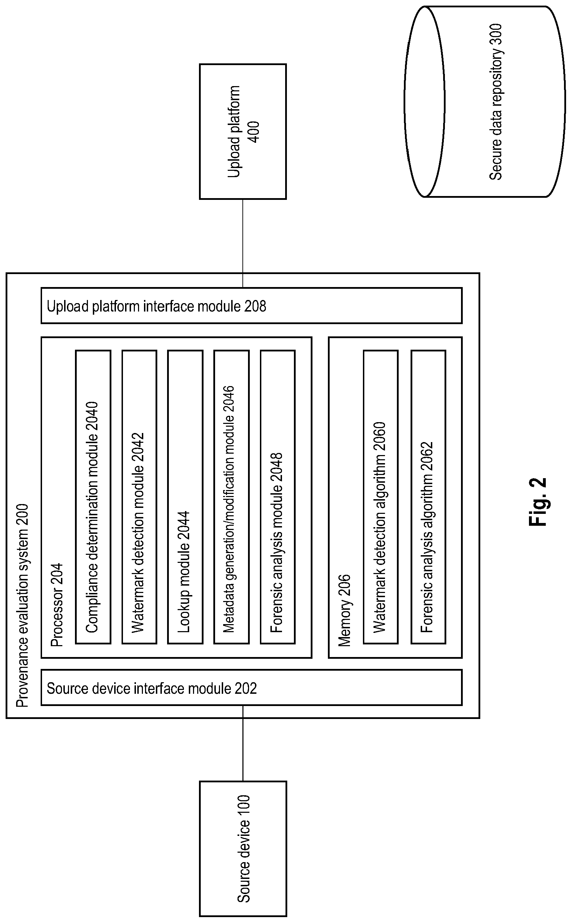

Fig. 2 shows a system which may be used to execute the computer-implemented method of e.g. the first aspect of the invention. The system includes a source device 100, a provenance evaluation system 200, a secure data repository 300, and an upload platform 400. These components may be connected to each other via a network (not shown), which may be a wireless network such as a cellular network, a Wi-Fi network, or the Internet. Alternatively, the components may be connected to each other via a wired network. In some cases, a subset of the components may be connected via one or more wireless networks, and another subset of the components may be connected via one or more wired networks. It will be appreciated that various combinations are possible without deviating from the scope of the invention. The provenance evaluation system 200 is connected to the source device 100 via a source device interface module 202, and the provenance evaluation system 200 is connected to the upload platform 400 via upload platform interface module 208. The purpose of the interface modules 202, 208 is to enable the provenance evaluation system 200 to interface with the source device 100 and the upload platform 400 to enable transfer of data between these components. The source device interface module 201 and/or the upload platform interface module 400 may be implemented in any suitable form, and may, for example, include a network component configured to facilitate the transfer of data-containing signals between the source device 100 and the provenance evaluation system 200, or between the provenance evaluation system 200 and the upload platform 400.

In addition to the source device interface module 202 and the upload platform interface module 400, the provenance evaluation system 200 further comprises processor 204 and memory 206. The processor 204 comprises a plurality of "modules". The provenance evaluation system 200 as a whole may be implemented either in the form of bespoke hardware, or more likely provenance evaluation system 200 may be implemented in software hosted on some server (e.g. a cloud computing server), for example in the form of computer-readable code comprising instructions which, when executed, causes a computer to execute the various functions described herein. Similarly, the modules (described in more detail later) may also be implemented in the form of hardware modules within the processor 204, but may be implemented in the form of software modules, each represented, for example, by a respective section of computer code comprising instructions which, when executed, cause the computer to execute the respective function associated with that module. In this sense, the modules may be interpreted as "functional modules", which may be implemented in any computer-based manner, such that they are able to execute the function with which they are associated. In an abundance of caution, we note that the whole of the provenance evaluation system 200 may be implemented on a general-purpose computer such as a desktop computer, a laptop computer, a smartphone, a tablet, or the like, or may be hosted on a server such as a cloud computing server.

More specifically, the processor 204 of the provenance evaluation system 200 comprises a compliance determination module 2040, a watermark detection module 2042, a lookup module 2044, a metadata generation/modification module 2046 and a forensic analysis module 2048. The specific implementation of the provenance evaluation system 200 shown in Fig. 2 is an illustrative example only, and it will be appreciated from the rest of the disclosure that the processor 204 of the provenance evaluation system 200 need not include some or all of the modules shown, or alternatively may include any sub-combination of the modules shown in Fig. 2. All sub-combinations are envisaged.

The memory 206 stores a watermark detection algorithm 2060 and a forensic analysis algorithm 2062. The specific implementation of the provenance evaluation system 200 shown in Fig. 2 is an illustrative example only, and it will be appreciated from the rest of the disclosure that the memory 206 of the provenance evaluation system 200 need not include some or all of the stored items shown, or alternatively may include any sub-combination of the stored items shown in Fig. 2. All sub-combinations are envisaged.

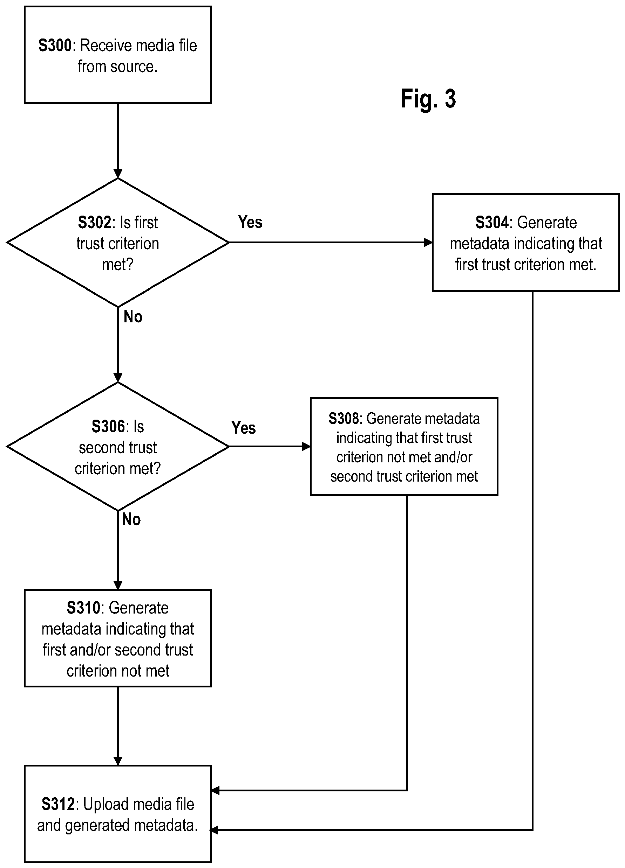

We now discuss the computer-implemented method which forms the focus of this disclosure in more detail, with reference to Figs. 3 to 6. The computer-implemented method may be executed by the system of Fig. 2, specifically the provenance evaluation system 200 thereof. Of course, methods or computer-implemented methods falling within the scope of the present disclosure may be executed by hardware or software which his arranged differently from the provenance evaluation system 200 of Fig. 2, but we refer to this arrangement in the following disclosure.

Fig. 3 is a flowchart illustrating a computer-implemented method according to an aspect of the present disclosure. In a first step S300, the provenance evaluation system 200 receives, via the source device interface module 201, a media file from the source device 100. The media file may be an electronic media file, such as a video file, an image file, an audio file. By virtue of being an electronic media file, the media is represented by electronic data in some form. The computer-implemented method executed on and in respect of the electronic media file effectively represents a tool which enables e.g. the generation of metadata which can be published alongside the electronic media file on the upload platform 400 to enable viewers to obtain information about the provenance of the electronic media file.

In step S203, it is determined whether a first trust criterion is met. More specifically, the compliance determination module 2040 may determine whether the electronic media file meets a first trust criterion. Meeting the first trust criterion may correspond to compliance with a predetermined trust establishment protocol. The first trust criterion may require that the electronic media file is associated with an existing record stored in secure data repository 300. In some implementations the secure data repository 300 may be a blockchain, with the existing record being stored on the distributed ledger of the blockchain. Because of the inherent immutability of records stored on a blockchain, records stored thereon are inherently "secure". The first trust criterion may further require that the electronic media file has not been altered. More specifically, the existing record stored in the secure data repository 300 may have been generated at the same time as the electronic media file was originally generated, and the first trust criterion may require that the electronic media file has not been altered since the electronic media file was originally generated, or the existing record in the secure data repository 300 was originally generated.

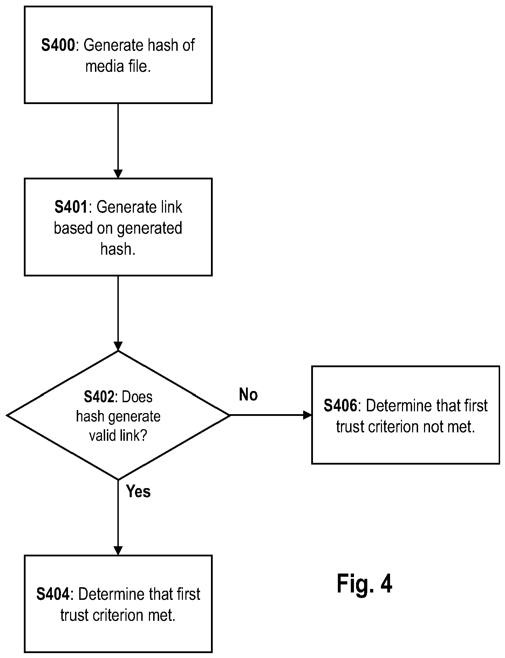

Fig. 4 illustrates a computer-implemented method by which it may be determined whether the first trust criterion is met, which may be executed by the compliance determination module 2040 of the processor 204 of the provenance evaluation system 200. According to the example shown in Fig. 4, a hash of the electronic media file is used to generate a link to the existing record on the secure repository 300. This means that, as long as the data representing the electronic media file remains unchanged, when a hashing algorithm is applied to that data, a valid link to the existing record in the secure data repository 300 will be generated. Thus, if a link which is generated based on a hash of the data representing the electronic media file is a valid link (i.e. leads to an existing record on the secure repository 300 referring to the electronic media file), it may be determined both that the existing record on the secure repository 300 exists, and that the data representing the electronic media file has not been tampered with or otherwise altered - and therefore that the first trust criterion is met. This process may be referred to as the trust establishment protocol.

Returning the process by which it is determined whether the first trust criterion is met, in a first step S400, the compliance determination module 2040 of the processor 204 of the provenance evaluation system 200 may generate a hash of the electronic media file, or more specifically may generate a hash of the data representing the electronic media file. The hash may be generated using any suitable hashing algorithm. In step S401, a link is generated using the generated hash. The link may be generated according to a scheme which is defined by the trust establishment protocol, in order to ensure that it takes the same form as the link which was originally generated. In step S402 it is determined whether the link is a valid link, e.g. by attempting to follow the link. If it is determined that the link is a valid link, e.g. because it leads to an existing record in the secure data repository 300, it is determined in step S404 that the first trust criterion is met. If it is determined that the link is not a valid link, e.g. because it does not lead to an existing record in the secure data repository 300, then it is determined in step S406 that the first trust criterion is not met. This may mean that the no record ever existed in the secure data repository 300. Or, this may mean that the data representing the electronic media file has changed (i.e. the file has somehow been altered), which means that the generated hash is different from the hash which was used to generate the link to the existing record stored in the secure data repository 300, which therefore can no longer be retrieved.

Returning to Fig. 3, if it is determined in step S302 that the first trust criterion is met, e.g. that an existing record is present in the secure data repository 300 and that the electronic media file has not been altered relative to when the existing record was generated, the process proceeds to step S304. In this step, the metadata generation/modification module 2046 may generate new metadata indicating that the first trust criterion is met. The new metadata may include additional information, e.g. information identifying the upload platform 400, information identifying the source device 100 (and/or an identifier of the user who uploaded the electronic media file), time information, and/or date information. The new metadata may then be added to the existing record in the secure data repository 300. Alternatively, a new record may generated in the secure data repository, the new record containing the same data as the existing record, the indication that the first trust criterion is met, and/or the additional data outlined above.

If it is determined in step S302 that the first trust criterion is not met, the process proceeds to step S306, in which it is determined whether the second trust criterion is met. As explained below, this step may be executed by the watermark detection module 2042 and the lookup module 2044. In this particular non-limiting example, meeting the second trust criterion means that a record relating to the electronic media file does exist in the secure data repository 300, but that the electronic media file may have been altered (and hence the link generated by hashing the data representing the electronic media file is not a valid link to the existing record in the secure data repository 300). In order to enable identification of an existing record, when the existing record is created, the trust establishment protocol may comprise embedding data into the electronic media file, the embedded data identifying a record stored in the secure data repository 300. The embedded data may be in the form of a watermark. In order that a hash of the data representing the electronic media file is able to lead to a record, during execution of the trust establishment protocol, the hash may be generated based on the electronic media file containing the watermark.

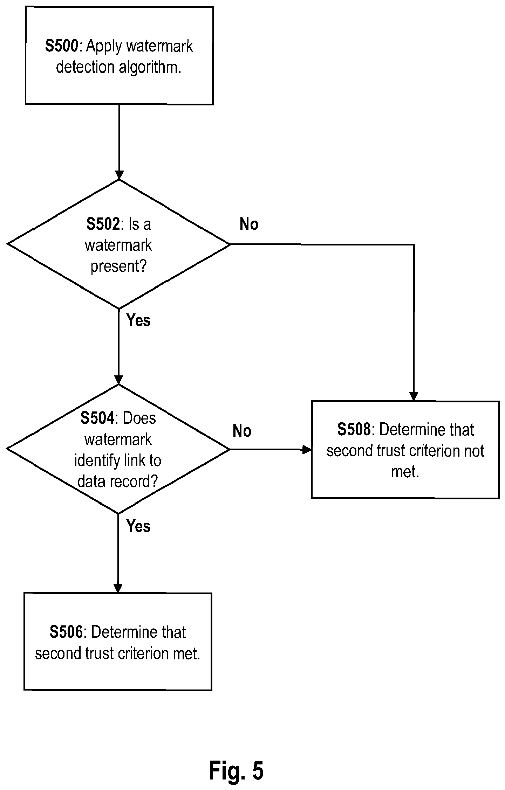

Fig. 5 is a flowchart illustrating a process by which it may be determined whether the second trust criterion is met. In a first step S500, the watermark detection module 2042 of the processor 204 retrieves the watermark detection algorithm 2060 from the memory 206 and applies it to the data representing the electronic media file. In step S502 it is determined, e.g. based on the output of the watermark detection algorithm 2060, whether a watermark is present in the data representing the electronic media file. If it is determined in step S502 that there is no watermark present in the data representing the electronic media file, then in step S508 it is determined that the second trust criterion is not met. If, on the other hand, it is determined in step S502 that a watermark is present in the data representing the electronic media file, the process proceeds to step S504. In this step, it is determined whether the detected watermark identifies a link to an existing record in the secure data repository 300. This may be determined by the lookup module 2044, which may execute a lookup of the embedded data in predetermined location, e.g. in a lookup table. If the lookup reveals that the embedded data does identify an existing record in the secure repository 300, it is determined in step S506 that the second trust criterion is met. If, on the other hand, the lookup reveals that the embedded data does not identify an existing record in the secure data repository 300, it is determined in step S508 that the second trust criterion is not met.

Returning to Fig. 3, if it is determined in step S306 that the second trust criterion is met, the process proceeds to step S308. In this step, the metadata generation/modification module 2046 may generate new metadata indicating that the first trust criterion is not met, and/or may generate new metadata indicating that the second trust criterion is met. As before, the new metadata may include additional information, e.g. information identifying the upload platform 400, information identifying the source device 100 (and/or an identifier of the user who uploaded the electronic media file), time information, and/or date information. Because the first trust criterion is not met, it is possible that the electronic media file has been somehow altered since the existing record was originally generated. The generated metadata may include information specifying this. The new metadata may comprise a link or other reference to the existing record on the secure data repository 300, which will contain information indicating the previous history of the electronic media file. The new metadata may then be added to the existing record in the secure data repository 300. Alternatively, a new record may be generated in the secure data repository 300, the new record comprising a link or reference to the existing record on the secure data repository 300.

On the other hand, if it is determined in step S306 that the second trust criterion is not met, the process proceeds to step S310. In this step, the metadata generation/modification module 2046 may generate new metadata indicating that the first trust criterion is not met, and/or may generate new metadata indicating that the second trust criterion is not met. As before, the new metadata may include additional information, e.g. information identifying the upload platform 400, information identifying the source device 100 (and/or an identifier of the user who uploaded the electronic media file), time information, and/or date information. The new metadata may then be stored in a new record on the secure data repository 300 (because there is no existing record to modify or to reference).

At this point in the method of Fig. 3, regardless of whether the first trust criterion and/or second trust criterion has been met, new has been generated (either in step S304, S308, or S310). At this point, the process proceeds to step S312, in which the electronic media file is uploaded to the upload platform 400. The generated metadata, or a link or reference to the generated metadata is also uploaded to the upload platform 400, enabling users of the upload platform 400 (e.g. users viewing a news website or social media platform) to access the generated metadata and, if it exists, data found in the existing record on the secure repository 300. The reference to the generated metadata may be in the form of a link to the relevant record in the secure data repository 300. It should be noted that, before upload, the process may comprise a step of transcoding the electronic media file into a suitable format for upload on the upload platform 400.

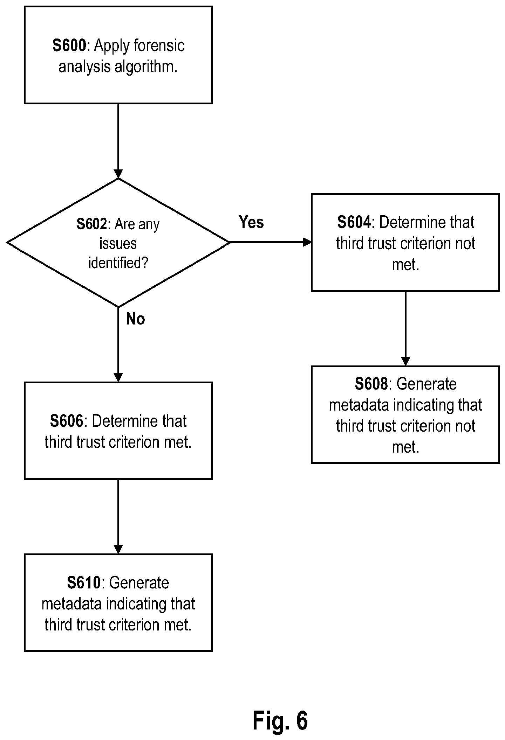

As well as checking for existing records stored on the secure repository 300, to determine whether the electronic media file meets criteria relating to a predetermined trust establishment protocol, forensic analysis techniques may also be applied to the electronic media file to detect other kinds of tampering, alteration, or any other activities which may lead to the media being untrustworthy. A given forensic analysis technique may be used to determine whether a third trust criterion is met. Fig. 6 illustrates a process in which it is determined whether the third trust criterion is met. This process may be applied anywhere during the method shown in Fig. 3, e.g. between steps S300 and S302, between steps S302 and S304, or between S310 and S312. It should be noted that these are not an exhaustive list of times at which the method of Fig. 6 could be applied. Alternatively, the method of Fig. 6 could be applied entirely independently, i.e. not in combination with computer-implemented methods which determine compliance with the predetermined trust establishment protocol.

In a first step S600, the forensic analysis module 2048 retrieves the forensic analysis algorithm 2062 from the memory 206 of the provenance evaluation system 200, and applies it to the electronic media file. Examples of the kinds of forensic analysis algorithm 2062 which may be used in computer-implemented methods according to the present disclosure are set out in detail elsewhere, and may be used in the context of the process shown in Fig. 6. In step S602, e.g. based on an output of the forensic analysis algorithm 2062, it is determined whether any issues are identified with the electronic media file to which the forensic analysis algorithm 2062 is applied by the forensic analysis module 2048. If issues are identified in step S602, the process proceeds to step S604 in which it is determined that the third trust criterion is not met. Then, in step S608, the metadata generation/modification module 2046 generates metadata indicating that the third trust criterion is not met. On the other hand, if issues are not identified in step S602, the process proceeds to step S606 in which it is determined that the third trust criterion is met. Then, in step S610, the metadata generation/modification module 2046 generates metadata indicating that the third trust criterion is met.

The generated metadata, or a link or reference to the generated metadata may also uploaded to the upload platform 400, enabling users of the upload platform 400 (e.g. users viewing a news website or social media platform) to access the generated metadata and. The generated metadata may include a reference to relevant existing record in the secure data repository 300. Alternatively, the generated metadata may be stored in a new record on the secure data repository 300, e.g. because there is no existing record to modify or to reference.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 100.

## Claims

1. A computer-implemented method of evaluating the provenance of an electronic media file, the computer-implemented method comprising:
receiving the electronic media file from a source;
determining whether the electronic media file meets a first trust criterion;
in response to a determination that the electronic media file does not meet the first trust criterion, determining whether the electronic media file meets a second trust criterion; and
in response to a determination that the electronic media file meets the second trust criterion, generating first metadata associated with the electronic media file, the first metadata to indicate that the electronic media file does not meet the first trust criterion.

2. A computer-implemented method according to claim 1, wherein:
the first trust criterion indicates that:
the electronic media file is associated with an existing record stored in a secure data repository, the existing record comprising metadata relating to the provenance of the electronic media file; and
the electronic media file has not undergone unauthorized modifications or alterations.

3. A computer-implemented method according to claim 2, wherein:
determining whether the electronic media file meets with the first trust criterion comprises:
applying a hashing algorithm to electronic data representing the electronic media file to generate a hash; and
generating a reference based on the generated hash; and
determining whether the generated reference is a valid reference to an existing record stored in a secure data repository, the existing record comprising metadata relating to the provenance of the electronic media file,
wherein:
if the generated reference is a valid reference, it is determined that the electronic media file meets the first trust criterion; and
if the generated reference is not a valid reference, it is determined that the electronic media file does not meet the first trust criterion.

4. A computer-implemented method according to any one of claims 1 to 3, wherein:
in response to a determination that the electronic media file meets the first criterion, the computer-implemented method further comprises generating metadata to indicate that the electronic media file meets the first trust criterion.

5. A computer-implemented method according to claim 4, wherein:
generating metadata to indicate that the electronic media file meets the first trust criterion comprises:
generating a new record on the secure data repository, the new record comprising:
the generated metadata indicating that the electronic media file meets the first trust criterion; and
a link or reference to the existing record stored in the secure repository or a copy of the metadata present in the existing record in the secure data repository.

6. A computer-implemented method according to any one of claims 1 to 5, wherein:
the second trust criterion indicates that the electronic media file is associated with an existing record stored in a secure data repository, the record comprising metadata relating to the provenance of the electronic media file.

7. A computer-implemented method according to claim 6, wherein:
determining whether the electronic media file meets the second trust criterion comprises:
determining whether electronic data representing the electronic media file comprises embedded data identifying a record stored in the secure data repository, the record comprising metadata relating to the provenance of the electronic media file,
wherein:
if it is determined that electronic data representing the electronic media file comprises embedded data identifying a record stored in the secure data repository, it is determined that the electronic data file meets the second trust criterion; and
if it is determined that electronic data representing the electronic media file does not comprise embedded data identifying a record stored in the secure data repository, it is determined that the electronic data file does not meet the second trust criterion.

8. A computer-implemented method according to claim 7, wherein:
the embedded data is in the form of a watermark in the electronic data representing the electronic media file.

9. A computer-implemented method according to any one of claims 1 to 8, wherein:
generating the first metadata comprises:
generating a new record on the secure data repository, the new record comprising:
the first metadata indicating that the electronic media file does not meet the first trust criterion and/or second metadata indicating that the electronic media file meets the second trust criterion; and
a link or reference to the existing record stored in the secure repository or a copy of the metadata present in the existing record in the secure data repository.

10. A computer-implemented method according to any one of claims 1 to 9, wherein:
in response to a determination that the electronic media file does not meet the second trust criterion, the computer-implemented method further comprises generating third metadata to indicate that the second trust criterion is not met.

11. A computer-implemented method according to any one of claims 1 to 10, wherein:
the generated new record in the secure data repository is accessible via a link or reference, the link or reference being generatable by applying a hashing algorithm to electronic data representing the electronic media file to generate a hash, wherein the link or reference is derivable form the generated hash.

12. A computer-implemented method according to any one of claims 1 to 11, further comprising:
determining whether the electronic media file meets a third trust criterion; and
in response to a determination that the electronic media file does not meet the third trust criterion, modifying metadata associated with the electronic media file to indicate that the electronic media file does not meet the third trust criterion.

13. A computer-implemented method according to claim 12, wherein:
determining whether the electronic media file meets a third trust criterion comprises applying a forensic algorithm to electronic data representing the electronic media file, the forensic algorithm configured to analyse the electronic data representing the electronic media file to detect malicious behaviour comprising one or more of: tampering; forgery; deepfakes; and infringement of IP rights.

14. A computer-implemented method according to any one of claims 1 to 13, wherein:
the secure data repository is a blockchain.

15. A computer-implemented method according to any one of claims 1 to 14, further comprising:
uploading the electronic media file to a platform where it is accessible to users via a network connection; and
uploading a link or reference or providing access to the generated metadata.
